# EUROPÄISCHE PATENTSCHRIFT

(11) **EP 3 371 482 B1**
(45) Veröffentlichungstag und Bekanntmachung des Hinweises auf die Patenterteilung: **30.12.2020**
(21) Anmeldenummer: 16787730.7
(22) Anmeldetag: 24.10.2016
(51) Int. Cl.: F16H 1/32, F16C 19/38

(54) **GETRIEBE MIT ANLAUFSCHEIBE**
GEAR MECHANISM COMPRISING A THRUST WASHER
TRANSMISSION COMPORTANT UN FLASQUE DE BUTÉE

(30) Priorität: 03.11.2015 DE 102015014087
(43) Veröffentlichungstag der Anmeldung: 12.09.2018
(73) Patentinhaber: SEW-Eurodrive GmbH & Co, 76646 Bruchsal (DE)
(72) Erfinder: BLÖMEKE, Jens, 64560 Riedstadt (DE); HANNET, Stefan, 68723 Schwetzingen (DE); HÖHNE, Sebastian, 82256 Fürstenfeldbruck (DE); HUBER, Thomas, 67165 Waldsee (DE)
(86) Internationale Anmeldenummer: PCT/EP2016/025122
(87) Internationale Veröffentlichungsnummer: WO 2017/076506

(56) Entgegenhaltungen:
- WO-A1-2013/051457
- CN-U- 202 338 562
- DE-A1-102006 031 956
- DE-A1-102007 034 813
- DE-A1-102008 009 759
- DE-T5-112013 005 750
- JP-A- 2004 308 792
- US-A1- 2011 222 807

## Beschreibung

Die Erfindung betrifft ein Getriebe mit Anlaufscheibe.

Es ist allgemein bekannt, dass die Herstellung von Exzenterwellen eines Getriebes mit einer Rundschleifmaschine ausführbar ist.

Aus der EP1225356 A1 **ist eine unrunde Welle-Nabe-Verbindung bekannt.**

**Aus der** CN 202 338 562 U ist ein zweireihiges Kugellager bekannt.

**Aus der** JP 2004 308792 A **ist als nächstliegender Stand der Technik ein Getriebe mit zweireihigem Kugellager bekannt.**

**Aus der** DE 10 2012 023 809 A1 **ist ein Drehzahlminderer der exzentrisch oszillierenden Bauart bekannt**.

**Aus der** DE 10 2007 034 813 A1 **ist ein Schrägkugellager bekannt**.

**Aus der** DE 10 2006 031 956 A1 **ist ein zweireihiges Kugellager bekannt.**

**Aus der** US 2011/222 807 A1 **ist ein schräges Tandemkugellager bekannt**.

**Aus der** DE 10 2008 009 759 A1 **ist ein oszillierendes Planetengetriebesystem bekannt**.

**Aus der** WO 2013/051 457 A1 **ist ein Transmissionsgetriebe bekannt.**

**Aus der** DE 11 2013 005 750 T5 **ist ein Gleitelement bekannt.**

Der Erfindung liegt daher die Aufgabe zugrunde, die ein Getriebe einfach und kostengünstig und trotzdem für hohe Belastungen kompakt auszubilden.

Erfindungsgemäß wird die Aufgabe bei dem Getriebe nach den in Anspruch 1 angegebenen Merkmalen gelöst.

Von Vorteil ist dabei, dass die Herstellung einfach ausführbar ist und somit ein Lager kostengünstig und einfach herstellbar ist, dessen Innenring und Außenring geschrägt sind, wobei in der Schrägungsfläche Ausnehmungen zur Aufnahme der in zwei Reihen angeordneten Wälzkörper angeordnet sind. Somit ist eine hohe Stabilität gegen Axialkräfte und/oder Querkräfte erreichbar. Dies gilt sogar dann, wenn nur Kugeln als Wälzkörper verwendet werden.

**Von Vorteil ist dabei, dass die Anlaufscheibe in einfacher Weise verdrehgesichert ist und somit drehfest mit der Exzenterwelle verbunden ist. Auf diese Weise sind die Wälzkörper des Lagers der exzentrisch angeordneten außenverzahnten Scheibe axial gesichert. Durch die Schräglager ist eine besonders einfache Herstellung ermöglicht. Außerdem ist bei einer zweireihigen Lagerung eine sehr hohe Laufruhe und eine hohe Stabilität gegen Querkräfte und/oder Axialkräfte erreichbar. Dies gilt sogar dann, wenn nur Kugeln als Wälzkörper anstatt von Rollen, wie Zylinderrollen, verwendet werden.**

**Bei einer vorteilhaften Ausgestaltung ist die Abtriebswelle als zweiwangiger Planetenträger ausgeführt,**
**wobei an einer ersten Wange des Planetenträgers Stege ausgeformt sind und die zweite Wange derart schraubverbunden ist mit den Stegen, dass die Schräglager mit einer Vorspannung beaufschlagt sind,**
**wobei das erste Schräglager an der ersten Wange und das zweite Schräglager an der zweiten Wange abgestützt ist,**
**insbesondere wobei die Schräglager in O-Anordnung angeordnet sind. Von Vorteil ist dabei, dass die Vorspannung für die Schräglager bei der Herstellung in einfacher Weise, nämlich beim Schraubverbinden der Stege mit der zweiten Wange, erzeugbar sind.**

**Erfindungsgemäß weist das Getriebe eine Anlaufscheibe auf, welche zur axialen Begrenzung der Wälzkörper des Lagers der außenverzahnten Scheibe auf die Exzenterwelle aufgeschoben ist,**
**insbesondere wobei dabei die Anlaufscheibe auf einen zentrischen, insbesondere also zur Achse der Exzenterwelle rotationssymmetrischen, Bereich der Exzenterwelle aufgeschoben ist,**
**wobei ein an der Anlaufscheibe ausgebildeter Vorsprung eine Kante, insbesondere einen Rand, des Exzenterkernbereichs überdeckt,**
**insbesondere so dass die Anlaufscheibe formschlüssig verbunden und/oder drehfest verbunden ist mit der Exzenterwelle,**

Wichtige Merkmale bei der Anlaufscheibe sind, dass sie zur axialen Sicherung von Wälzkörpern eines Lagers, insbesondere eines Zylinderrollenlagers, vorgesehen ist, wobei die Anlaufscheibe als Kreisscheibe ausgeführt ist, die einen axial hervor ragenden, insbesondere radial äußeren, Vorsprung aufweist,
wobei die Kreisscheibe eine Ausnehmung aufweist, die außermittig angeordnet ist, insbesondere wobei also der Mittelpunkt der vorzugsweise kreisförmigen Ausnehmung beabstandet ist von der Mittelachse und/oder vom Mittelpunkt der Kreisscheibe,
insbesondere wobei der Vorsprung ringförmig ausgebildet ist und die Ringachse beabstandet ist vom der Mittelpunkt der vorzugsweise kreisförmigen Ausnehmung.

Von Vorteil ist dabei, dass durch die außermittige kreisförmige Ausnehmung eine drehfeste Verbindung mit einer Exzenterwelle in einfacher Weise ermöglicht ist. Denn das Lager ist exzentrisch angeordnet, also auf einem Exzenterkernberiech der Welle. Die Ausnehmung ist jedoch zentrisch zur Drehachse der Exzenterwelle anordenbar. Somit ist durch einen axialen Vorsprung an der Anlaufscheibe eine drehfeste Verbindung zwischen Anlaufscheibe und Exzenterwelle herstellbar.

Bei einer vorteilhaften Ausgestaltung ist die Anlaufscheibe als Kreisscheibe ausgeführt, die einen axial hervor ragenden, insbesondere radial äußeren, Vorsprung aufweist,
wobei die Kreisscheibe eine Ausnehmung aufweist, die außermittig angeordnet ist, insbesondere wobei also der Mittelpunkt der vorzugsweise kreisförmigen Ausnehmung beabstandet ist von der Mittelachse und/oder vom Mittelpunkt der Kreisscheibe,
insbesondere wobei der Vorsprung ringförmig ausgebildet ist und die Ringachse beabstandet ist vom der Mittelpunkt der vorzugsweise kreisförmigen Ausnehmung. Von Vorteil ist dabei, dass durch den Vorsprung zusammen mit der außermittig an der Anlaufscheibe angeordneten kreisförmigen Ausnehmung eine eindeutige Festlegung der Anlaufscheibe ausgeführt ist. Somit ist eine drehfeste Verbindung mit der Exzenterwelle in einfacher und kostengünstiger Weise erreichbar.

Bei einer vorteilhaften Ausgestaltung ist der vom Vorsprung überdeckte axiale Bereich von vom dem Exzenterkernbereich überdeckten axialen Bereich umfasst,
und/oder wobei der von der Anlaufscheibe überdeckte axiale Bereich mit dem von dem Exzenterkernbereich überdeckten axialen Bereich überlappt, insbesondere echt überlappt. Von Vorteil ist dabei, dass der Vorsprung von der anlaufschiebe her übergestülpt ist über die umlaufende Kante des zylindrisch ausgeführten Exzenterkernbereichs. Somit ist eine kraftschlüssige Verbindung in einfacher Weise herstellbar und dadurch eine spielfreie drehfeste Verbindung mit der Exzenterwelle.

Bei einer vorteilhaften Ausgestaltung ist der Vorsprung kraftschlüssig mit dem Exzenterkernbereich verbunden, insbesondere auf diesen Bereich in radialer Richtung elastisch aufgedrückt ist. Von Vorteil ist dabei, dass eine spielfreie drehfeste Verbindung in einfacher Weise erreichbar ist.

Bei einer vorteilhaften Ausgestaltung weist bei dem Getriebe mit zumindest einer Exzenterwelle, zumindest einer außenverzahnten Scheibe und zumindest einem Umlaufrad, insbesondere Planetenrad, die Exzenterwelle einen Exzenterkernbereich auf, auf dem die außenverzahnte Scheibe drehbar gelagert angeordnet ist, insbesondere mittels eines Lagers,
wobei die Exzenterwelle einen unrund geformten Abschnitt aufweist, an welchem das Umlaufrad drehfest mit der Exzenterwelle verbunden ist.

Von Vorteil ist dabei, dass ein hohes Drehmoment auf kleinem Raumbereich übertragbar ist, weil das Umlaufrad über die besonders tragfähige Polygonverbindung mit der Exzenterwelle verbunden ist. Insbesondere im Vergleich zu einer Passfederverbindung überträgt die polygonale Welle-Nabe-Verbindung zwischen Umlaufrad und Exzenterwelle ein sehr hohes Drehmoment. Außerdem ist Herstellung einfach und kostengünstig ausführbar, da die zum Herstellen der Exzenterkernbereiche einsetzbar Werkzeugmaschine, insbesondere Schleifmaschine, auch zum Herstellen des unrunden Bereichs einsetzbar ist. Somit ist eine Schleifbearbeitung ohne zusätzliche Aufspannung und Ausrichtung ausführbar.

Bei einer vorteilhaften Ausgestaltung ist der Exzenterkernbereich ein kreiszylindrischer Abschnitt, der parallel aber beabstandet, insbesondere also nicht koaxial, zur Mittenachse der Exzenterwelle und/oder des Umlaufrades angeordnet ist. Von Vorteil ist dabei, dass der Exzenterkernberiech außermittig zur Wellenachse der Exzenterwelle angeordnet ist. Somit ist die Schleifbearbeitung durch dieselbe Maschine ausführbar, mit welcher auch der unrunde Bereich bearbeitbar ist.

Bei einer vorteilhaften Ausgestaltung ist der unrund geformte Abschnitt axial beabstandet vom Exzenterkernbereich. Von Vorteil ist dabei, dass zur Bearbeitung der Berieche nur eine axiale Verschiebung notwendig ist.

Bei einer vorteilhaften Ausgestaltung ist der unrund geformte Abschnitt hypotrochoidal geformt, insbesondere also als Hypotrochoide geformt ist oder aus hypotrochoidalen

Abschnitten zusammengesetzt ist. Von Vorteil ist dabei, dass eines besonders tragfähige Welle-Nabe-Verbindung wählbar ist.

Bei einer vorteilhaften Ausgestaltung weist das Umlaufrad eine entsprechend dem unrund geformten Abschnitt geformte Ausnehmung auf,
insbesondere so dass das Umlaufrad drehfest und spielfrei mittels des unrunden Abschnittes mit der Exzenterwelle verbunden ist. Von Vorteil ist dabei, dass das Umlaufrad aufgesteckt ist auf die Exzenterwelle, insbesondere thermisch aufgeschrumpft, und somit einen spielfreie drehfeste Verbindung ermöglicht ist.

Bei einer vorteilhaften Ausgestaltung ist die Außenverzahnung der Scheibe mit einem Hohlrad, insbesondere mit einem gehäusebildenden Hohlrad, im Eingriff. Von Vorteil ist dabei, dass keine Rollen oder Kurvenscheiben benötigt werden sondern evolventenverzahnte Scheiben verwendbar sind. Somit ist ein exaktes und präzises Abrollen der Scheibe am Umfang des Hohlrades ermöglicht.

Bei einer vorteilhaften Ausgestaltung ist die Außenverzahnung als Evolventenverzahnung ausgeführt. Von Vorteil ist dabei, dass eine einfache und präzise Herstellung ausführbar ist.

Bei einer vorteilhaften Ausgestaltung weist die Exzenterwelle einen zweiten Exzenterkernbereich auf, der axial beabstandet ist vom ersten Exzenterkernbereich und einen Versatz in Umfangsrichtung von 180° aufweist,
insbesondere wobei die Exzenterkernbereiche gleichartig geformt ausgeführt sind. Von Vorteil ist dabei, dass eine ausgewuchtete Bewegung ermöglicht ist.

Bei einer vorteilhaften Ausgestaltung ist die Exzenterwelle drehbar gelagert in einer Abtriebswelle des Getriebes aufgenommen, insbesondere wobei die Achse der Exzenterwelle parallel und beabstandet zur Achse der Abtriebswelle angeordnet ist. Von Vorteil ist dabei, dass eine Abführung des Drehmoments an die Abtriebswelle in einfacher Weise ermöglicht ist.

Bei einer vorteilhaften Ausgestaltung ist die Abtriebswelle mittels zumindest eines Schräglagers in dem Hohlrad drehbar gelagert. Von Vorteil ist dabei, dass eine stabile Ausführung ermöglicht ist.

Bei einer vorteilhaften Ausgestaltung ist das Umlaufrad mit einer Sonnenradverzahnung im Eingriff, die koaxial zur Abtriebswelle angeordnet ist,
insbesondere wobei das Umlaufrad, die Sonnenradverzahnung und mindestens ein weiteres Umlaufrad eine Stirnradverteilgetriebestufe bilden. Von Vorteil ist dabei, dass eine zusätzliche Übersetzungsstufe vorhanden ist bei der Aufteilung des Drehmoments von der Sonne an mehrere Umlaufräder.

Bei einer vorteilhaften Ausgestaltung ist die Sonnenradverzahnung drehfest und koaxial zu einem Zahnrad angeordnet, das im Eingriff mit einem von einem Elektromotor direkt oder über eine Kupplung angetriebenen Verzahnungsteil, insbesondere Ritzel, ist. Von Vorteil ist dabei, dass eine Vorstufe mit einer geeigneten Übersetzung vorgeordnet ist.

Bei einer vorteilhaften Ausgestaltung weist die Exzenterwelle einen zweiten Exzenterkernbereich auf, auf dem eine zweite außenverzahnte Scheibe des Getriebes drehbar gelagert angeordnet ist,
wobei die Außenverzahnung der zweiten Scheibe mit der Innenverzahnung des Hohlrades im Eingriff ist. Von Vorteil ist dabei, dass eine ausgewuchtete Bewegung ermöglicht ist.

Wichtige Merkmale bei dem erfindungsgemäßen Getriebe sind auch, dass es Getriebe mit zumindest einer Exzenterwelle, zumindest einer außenverzahnten Scheibe und zumindest einem Umlaufrad, insbesondere Planetenrad, einer Sonnenradwelle und einem Hohlrad vorgesehen ist, wobei
die Exzenterwelle einen Exzenterkernbereich aufweist, auf dem die außenverzahnte Scheibe drehbar gelagert angeordnet ist, insbesondere mittels eines Lagers,
wobei die Außenverzahnung der außenverzahnten Scheibe im Eingriff steht mit der Innenverzahnung des Hohlrades, insbesondere welches mit einem Gehäuseteil des Getriebes drehfest verbunden ist,
wobei die Exzenterwelle drehbar gelagert ist in einer Abtriebswelle, insbesondere Planetenträgerwelle,
wobei die Abtriebswelle drehbar gelagert ist zum Hohlrad,
wobei das jeweilige Umlaufrad jeweils drehfest verbunden ist mit einer oder der Exzenterwelle, insbesondere mittels eines polygonalen Abschnitts oder mittels einer Steckverzahnung,
wobei jedes Umlaufrad mit der Sonnenradwelle im Eingriff ist,
wobei die Außenverzahnung der außenverzahnten Scheibe eine Evolventenverzahnung ist und die Innenverzahnung des Hohlrades ebenfalls eine Evolventenverzahnung ist.

Von Vorteil ist dabei, dass eine Evolventenverzahnung verwendbar ist. Somit ist eine einfache Herstellung des äußeren Verzahnungseingriffs ausführbar. Denn für die Herstellung sind einfache Herstellmaschinen verwendbar. Durch Verwendung von zwei um 180° versetzt angeordnete Scheiben auf jeder Exzenterwelle ist die Unwucht des Getriebes reduzierbar und somit auch die Belastung der in Eingriff stehenden Evolventenverzahnungen des Hohlrades und der Scheiben. Vorzugsweise sind drei Exzenterwellen in Umfangsrichtung gleichmäßig beabstandet und jeweils drehbar in der Abtriebswelle gelagert. Die Exzenterwellen sind jeweils drehfest mit einem Planetenrad verbunden, wobei alle Planetenräder mit einer Sonnenradwelle drehfest verbunden sind. Somit ist die Sonnenradwelle als eintreibende Welle verwendbar und bildet mit den Planetenrädern eine Stirnradverteilstufe. Auf diese Weise ist das Getriebe einfach herstellbar und schwingungsarm realisierbar.

Die oben genannten vorteilhaften Ausgestaltungen sind bei diesem Getriebe alle anwendbar. Insbesondere die Ausgleichsscheibe bildet eine kostengünstige und einfache, aber sehr wirksame axiale Sicherung des Lagers der außenverzahnten Scheiben.

Weitere Vorteile ergeben sich aus den Unteransprüchen.

Die Erfindung wird nun anhand von Abbildungen näher erläutert:

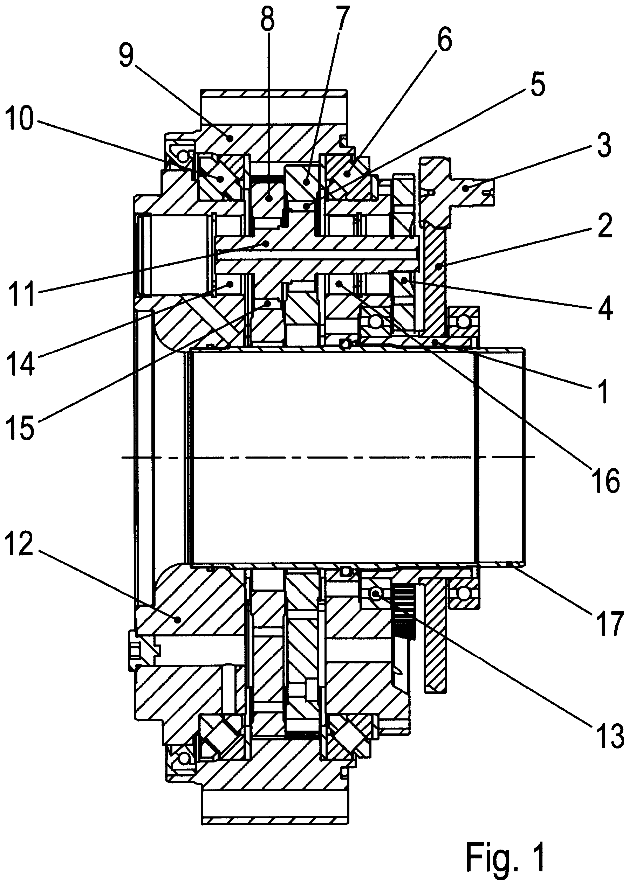

In der Figur 1 ist ein Querschnitt durch ein nicht beanspruchtes Getriebe mit Exzenterwellen 11 gezeigt.

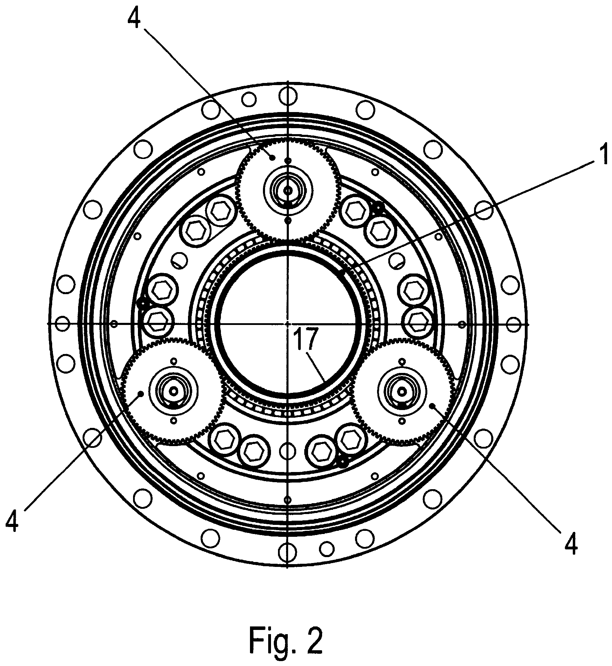

In der Figur 2 ist ein zugehöriger Längsschnitt gezeigt.

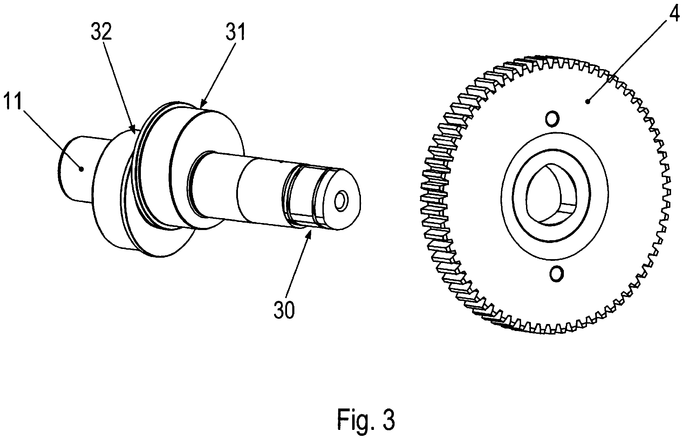

In der Figur 3 ist eine Exzenterwelle 11 und ein mit ihr verbundenes Planetenrad 4 in explodierter Darstellung gezeigt.

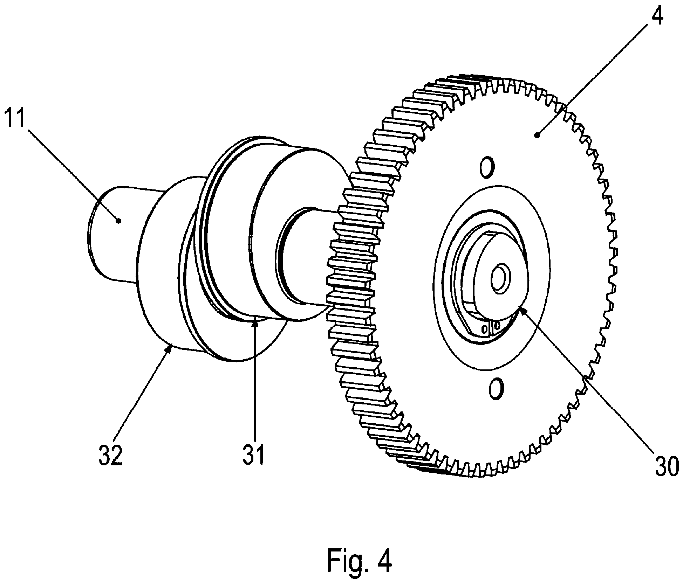

In der Figur 4 ist die zur Figur 3 gehörige nicht explodierte Darstellung gezeigt.
In der Figur 5 ist ein Querschnitt durch eine statt mit polygonalem Verbindungsabschnitt mit Steckverzahnungsabschnitt ausgeführte Exzenterwelle 11 samt der Lager (14, 15, 5, 16) und zweier Anlaufscheiben 50 für die Wälzkörper der Lager 5 und 15 gezeigt.
In der Figur 6 ist die Exzenterwelle 11, das Lager 5 und die Anlaufscheibe 50 explodiert dargestellt.
In der Figur 7 ist die Exzenterwelle und das Lager 5 explodiert und in Schrägansicht dargestellt.
In der Figur 8 ist die Anlaufscheibe 50 in Schrägdarstellung in einer ersten Blickrichtung dargestellt.
In der Figur 9 ist die Anlaufscheibe 50 in Schrägdarstellung in einer anderen Blickrichtung dargestellt.
In der Figur 10 ist das erfindungsgemäße Getriebe mit zweireihigen Schräglagern 100 in O-Anordnung anstatt der Lager 10 und 6 ausgeführt.
In der Figur 11 ist eines der Schräglager 100 in Querschnittdarstellung gezeigt.
In der Figur 12 ist das Schräglager 100 angeschnitten und in Schrägansicht dargestellt.

Wie in den Figuren gezeigt, treibt die eintreibende Welle ein Ritzel 3 an, das mit einem Zahnrad 2 im Eingriff ist.

Das Zahnrad 2 ist mit einer Sonnenradwelle 1 drehfest verbunden, die eine Sonnenradverzahnung aufweist oder mit einem Sonnenrad drehfest verbunden ist.

Mit dieser Sonnenradverzahnung sind drei Planetenräder 4 im Eingriff, welche jeweils drehfest mit einer Exzenterwelle 11 verbunden sind. Somit bilden die Sonnenradverzahnung mit den Planetenrädern 4 eine Stirnradverteilgetriebestufe.

Zur drehfesten Verbindung des jeweiligen Planetenrads 4 mit der jeweiligen Exzenterwelle 11 weist die Exzenterwelle 11 einen polygonal geformten axialen Abschnitt auf. Dabei ist das Polygon vorzugsweise gemäß einer Hypotrochoide geformt. Das Planetenrad 4 weist eine entsprechend geformte innenpolygonale Ausnehmung auf und ist aufgesteckt, insbesondere vorzugsweise thermisch aufgeschrumpft, auf die Exzenterwelle 11. Somit ist eine drehfeste spielfreie Verbindung zwischen jeweiligem Planetenrad 4 und jeweiliger Exzenterwelle 11 in einfacher Weise ausgeführt.

Die polygonale Außenkontur der Exzenterwelle 11 ist ohne besonderen Aufwand herstellbar, da die Exzenterwelle zwei von dem axialen Abschnitt beabstandete axiale Abschnitte aufweist, die jeweils als Exzenterkernbereich (31, 32) geformt sind. Hierzu weist jeder Exzenterkernbereich zwar eine kreiszylindrische Außenfläche auf; dabei ist aber die Zylinderachse beabstandet von der Mittelachse der Exzenterwelle 11, wobei die Zylinderachse parallel zur Mittelachse ausgerichtet ist.

Die Exzenterkernbereiche 11 sind axial voneinander beabstandet oder zumindest höchstens berührend angeordnet und weisen einen Versatz in Umfangsrichtung von 180° auf, wobei die Exzenterkernbereiche 11 ansonsten gleichartig ausgeführt sind.

Somit sind die Exzenterkernbereiche 31 und 32 sowie der polygonale Abschnitt mit ein und derselben Werkzeugmaschine, also in einer einzigen Aufspannung, herstellbar. Für die polygonale Außenkontur ergibt sich also kein besonderer Zusatzherstellungsaufwand.

Auf den ersten Exzenterkernbereich 31 ist ein Lager 5 aufgesteckt, das in einem mittig an einer ersten außenverzahnten Scheibe 7 angeordneten Bohrloch aufgenommen ist. Somit ist die erste Scheibe 7 drehbar gelagert auf dem Exzenterkernbereich 31. Die Außenverzahnung der Scheibe 7 ist als Evolventenverzahnung ausgeführt und ist im Eingriff mit der Innenverzahnung eines mit dem Gehäuse verbundenen oder gehäusebildenden Hohlrades 9. Dabei ist auch die Innenverzahnung des Hohlrades 9 als Evolventenverzahnung ausgeführt.

Auf den zweiten Exzenterkernbereich 32 ist ein Lager 5 aufgesteckt, das in einem mittig an einer zweiten außenverzahnten Scheibe 7 angeordneten Bohrloch aufgenommen ist. Somit ist die zweite Scheibe 7 drehbar gelagert auf dem zweiten Exzenterkernbereich 32. Die Außenverzahnung der zweiten Scheibe 7 ist als Evolventenverzahnung ausgeführt und ist ebenfalls im Eingriff mit der Innenverzahnung des Hohlrades 9.

Die Innenverzahnung des Hohlrades 9 erstreckt sich über einen derart weiten axialen Bereich, dass dieser die beiden von den Außenverzahnungen der ersten und der zweiten Scheibe 7 überdeckten axialen Bereiche überdeckt.

Die Exzenterwellen 11 sind drehbar gelagert in der Abtriebswelle 12, wobei die Lageraufnahmen der die Exzenterwellen 11 lagernden Lager radial beabstandet sind von der Mittelachse der abtreibenden Welle 12.

Die abtreibende Welle 12 ist koaxial zur Sonnenradwelle 1 angeordnet.

Die Abtriebswelle 12 ist mittels Schräglager 10 im Hohlrad 9 gelagert.

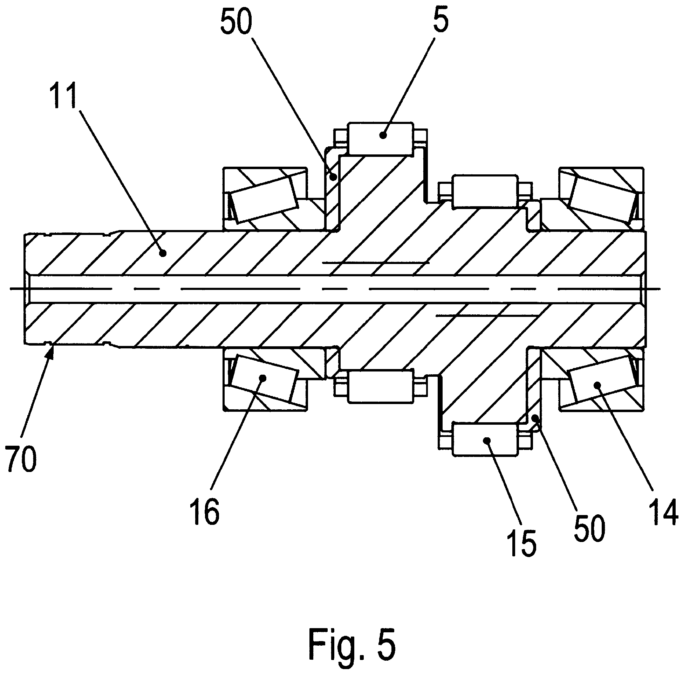

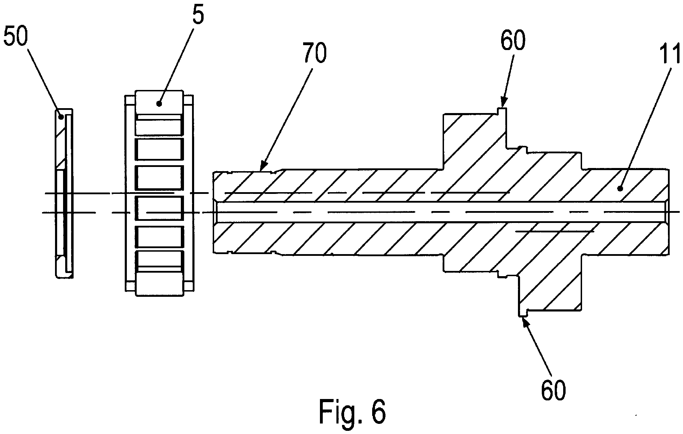

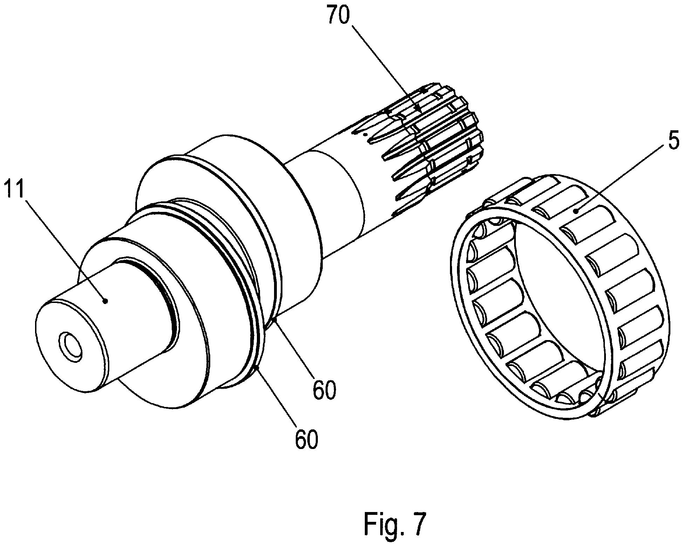

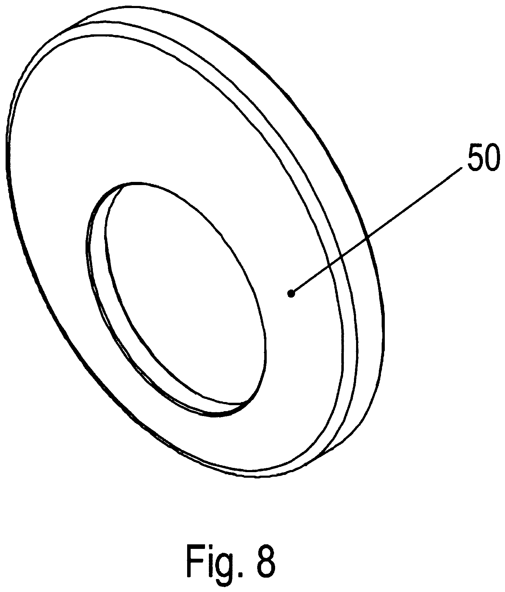

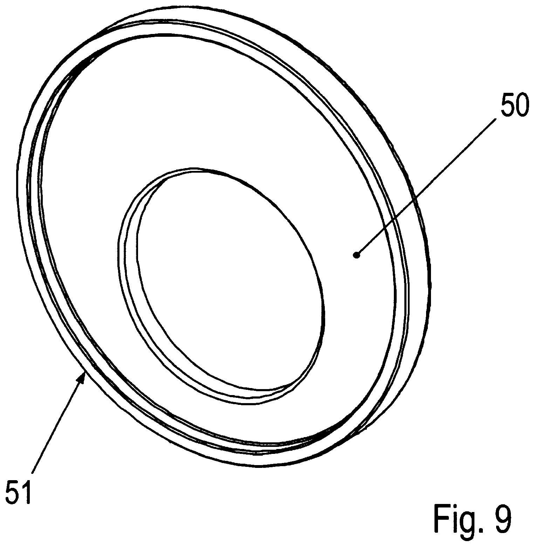

Wie in den Figuren 5 bis 9 gezeigt, ist die Exzenterwelle 11 auch mit einer Steckverzahnung 70 anstatt mit einer polygonalen Kontur ausführbar. das aufgenommene Zahnrad ist somit steckverbunden, insbesondere formschlüssig verbunden.

Das auf dem ersten Exzenterkernbereich 31 aufgeschobene Lager 5 lagert die erste Scheibe 7, das auf dem zweiten Exzenterkernbereich 32 aufgeschobene Lager 15 lagert die zweite Scheibe 8.

Die Exzenterwelle 11 ist beidseitig der Exzenterkernbereiche 31 und 32 gelagert mittels der Lager 14 und 16. Dabei ist das Lager 14 in der Abtriebswelle 12 aufgenommen.

An den Exzenterkernbereichen 31 und 32 sind jeweils Anlaufscheiben 50 angeordnet, die einen in Umfangsrichtung umlaufenden, axial hervor ragenden Vorsprung 51 aufweisen, der eine axiale Begrenzung und Sicherung für die Wälzkörper des Lagers 5 bewirkt.

Die Anlaufscheibe 50 weist ein nicht mittiges Loch auf, durch welches ein Abschnitt der Exzenterwelle 11 hindurchgesteckt ist. Somit ist durch den Vorsprung 51, welcher über den Rand des jeweiligen Exzenterkernbereichs (31, 32) gestülpt ist, eine Verdrehsicherung für die Anlaufscheibe 50 gebildet. Die Anlaufscheibe 50 ist also in Umfangsrichtung formschlüssig und somit drehfest mit der Exzenterwelle 11 vorgesehen. Dabei wirkt der Vorsprung 51 gleichzeitig als axiale Begrenzung für die Wälzkörper.

Der Exzenterkernbereich 31 weist außerdem eine Anlaufborde 60 auf, die radial weiter ausgedehnt ist als der restliche, als Lageraufnahem für das Lager 5 ausgebildete Bereich des Exzenterkernbereichs 31. Da das Lager 5 axial zwischen der Anlaufborde 60 und der ersten Anlaufscheibe 50 mit deren Vorsprung 51 angeordnet ist, ist es beidseitig axial gesichert.

Die Anlaufborde 60 ist einstückig, also einteilig, an der Exzenterwelle 11, insbesondere am Exzenterkernbereich 31, ausgeformt.

Ebenso ist eine zweite Anlaufscheibe 50 zur axialen Sicherung des Lagers 15 und somit auch der Wälzkörper des Lagers 15, vorgesehen, wobei die zweite Anlaufscheibe 50 auf den zweiten Exzenterkernbereich 32 aufgeschoben ist und der Vorsprung der zweiten Anlaufscheibe die Wälzkörper des Lagers 15 axial begrenzt.

Der Exzenterkernbereich 32 weist außerdem eine weitere Anlaufborde 60 auf, die radial weiter ausgedehnt ist als der restliche, als Lageraufnahem für das Lager 15 ausgebildete Bereich des Exzenterkernbereichs 32. Da das Lager 15 axial zwischen der weiteren Anlaufborde 60 und der ersten Anlaufscheibe 50 mit deren Vorsprung 51 angeordnet ist, ist es beidseitig axial gesichert.

Die Anlaufborde 60 ist einstückig, also einteilig, an der Exzenterwelle 11, insbesondere am Exzenterkernbereich 32, ausgeformt.

Die jeweilige Anlaufscheibe 50 ist aus Stahl, insbesondere aus einem Stahlblech, gefertigt.

Die beiden Anlaufborden 60 sind also koaxial zum jeweiligen Exzenterkernbereich (31, 32) ausgeführt, wobei die Exzenterkernbereiche (31, 32) außermittig, also exzentrisch, zur Drehachse der Exzenterwelle 11 angeordnet sind.

Mit der Abtriebswelle 12 ist ein hohles Rohr 17 drehfest verbunden, welches das Schmieröl im Getriebeinnenraum begrenzt und somit hält. Das hohle Rohr 17 ist radial innerhalb der Sonnenradwelle1 und radial beabstandet von den Scheiben 7 und 8.

Mittels der Evolventenverzahnungen der Scheiben 7 und 8 sowie des Hohlrades 9 ist eine einfache Abstützung am stationären Teil, also auch als Gehäuseteil verwendbaren Teil oder also auch an einem mit dem Hohlrad 9 verbundenen Gehäuseteil, einfach und kostengünstig ausführbar.

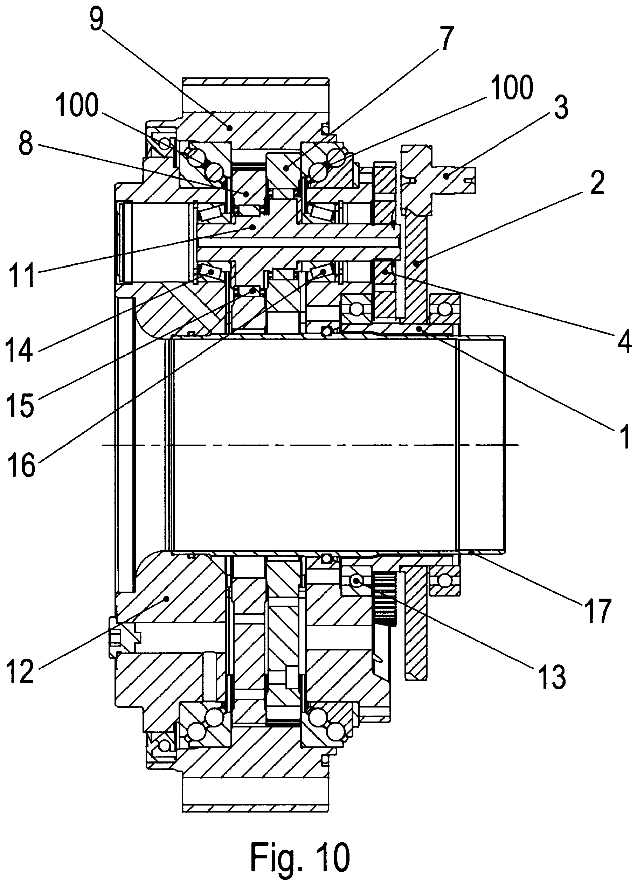

**Wie in der** Figur 10 **dargestellt, sind die Schräglager 6 und 10 durch zwei andere Schräglager 100 ersetzbar, die in O-Anordnung zueinander ausgerichtet sind.**

**Der Innenring des das Lager 10 ersetzenden Lagers 100 ist gegen eine Stufe der Abtriebswelle 12, insbesondere einer ersten Wange der als zweiwangiger Planetenträger ausgeführten Abtriebswelle 12, angestellt, der Außenring des das Lager 10 ersetzenden Lagers 100 ist gegen eine Stufe des Hohlrades 9 angestellt. Die Abtriebswelle 12 weist eine fein bearbeitete Lageraufnahme für den Innenring des das Lager 10 ersetzenden Lagers 100 auf, das Hohlrad weist eine fein bearbeitete Lageraufnahme für den Außenring des das Lager 6 ersetzenden Lagers 100 auf. Somit ist das das Lager 10 ersetzende Lager 100 abgestützt an der ersten Wange der Abtriebswelle 12. Das das Lager 6 ersetzende Lager 100 ist an der zweiten Wange abgestützt.**

**Diese abtreibende Welle 12 ist als zweiwangiger Planetenträger ausgeführt, wobei an einer ersten Wange axial sich erstreckende Stege einstückig, also einteilig, ausgeformt sind auf welche die zweite Wange des Planetenträgers aufgesetzt und schraubverbunden ist. Dabei wird die zweite Wange in axialer Richtung zur ersten Wange hin gedrückt. Die zwischengeordneten Lager 100 erhalten hierdurch eine Vorspannung, insbesondere eine axial gerichtete Vorspannung.**

**Der Innenring 112 des das Lager 6 ersetzenden Lagers 100 ist gegen eine Stufe der zweiten Wange des Planetenträgers 12 angestellt und in einer fein bearbeiteten Lageraufnahme der zweiten Wange aufgenommen. Der Außenring des das Lager 6 ersetzenden Lagers 100 ist gegen eine Stufe des Hohlrades 9 angestellt und in einer fein bearbeiteten Lageraufnahme des Hohlrades 9 aufgenommen**.

**Beim Schraubverbinden der zweiten Wange mit den an der ersten Wange einstückig, also einteilig, ausgeformten Stegen wird somit eine Vorspannung auf die in O-Anordnung angeordneten Lager 100 bewirkt**.

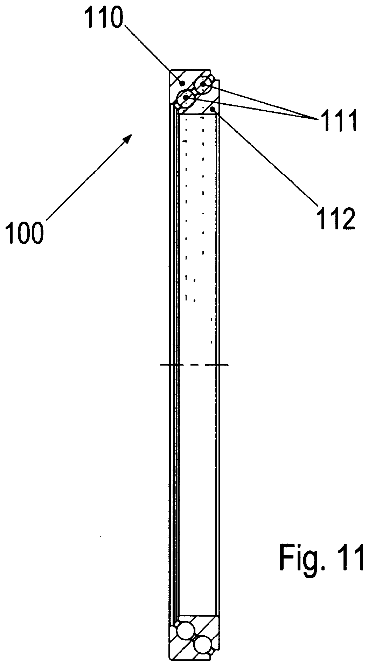

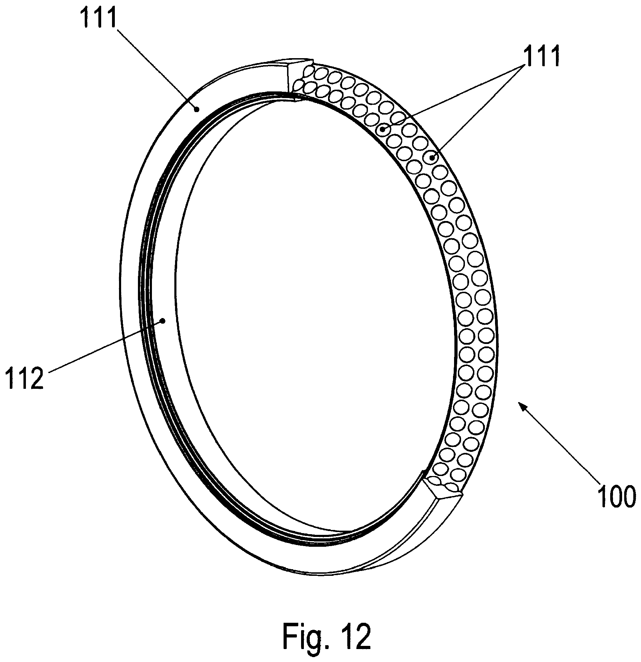

**Wie in den** **Figuren 11** **und** **12** **gezeigt, weist das Schräglager zwei axial voneinander beabstandete Kugelreihen auf. Jede Kugelreihe ist auf einem Kreis angeordnet, wobei die Normalenrichtung der den Kreis aufnehmenden Ebene in axialer Richtung ausgerichtet ist.**

**Die Anzahl der Wälzkörper 111, insbesondere also Kugeln, der ersten Kugelreihe gleicht der Anzahl der Wälzkörper 111 der zweiten Kugelreihe**.

**Die Kugeln jeder Kugelreihe sind in derselben axialen Position angeordnet und in Umfangsrichtung voneinander regelmäßig beabstandet**.

**Die erste Kugelreihe überdeckt einen kleineren Radialabstandsbereich als die zweite Kugelreihe. Somit ist die erste Kugelreihe radial weniger ausgedehnt als die zweite Kugelreihe**.

**Die erste Kugelreihe weist einen geringeren axialen Abstand zum anderen Schräglager auf als die zweite Kugelreihe.**
**Mittels der Schräglager 100 ist eine besonders einfache Herstellung ausführbar**.

### Bezugszeichenliste

1 Sonnenradwelle
2 Zahnrad
3 Ritzel
4 Planetenrad
5 Lager
6 Schräglager
7 erste außenverzahnte Scheibe
8 zweite außenverzahnte Scheibe
9 Hohlrad
10 Schräglager
11 Exzenterwelle
12 Abtriebswelle
13 Lager
14 Lager für Exzenterwelle 11
15 Lager für zweite Scheibe 8 zur Lagerung auf Exzenterwelle 11
16 Lager für Exzenterwelle zur drehbaren Lagerung gegenüber der Sonnenradverzahnung
17 Rohr
30 polygonaler Abschnitte der Exzenterwelle 11
31 erster Exzenterkernbereich
32 zweiter Exzenterkernbereich
50 Anlaufscheibe
60 Anlaufborde
51 umlaufender axialer Vorsprung
70 Steckverzahnung
**100 zweireihiges Schrägkugellager**
**110 Außenring**
**111 Wälzkörper, insbesondere Kugel**
**112 Innenring**

## Patentansprüche

1. Getriebe mit zumindest einer Exzenterwelle (11), zumindest einer außenverzahnten Scheibe (7) und zumindest einem Umlaufrad, insbesondere Planetenrad, einer Sonnenradwelle (1), und einem Hohlrad (9),
wobei die Exzenterwelle einen Exzenterkernbereich aufweist, auf dem die außenverzahnte Scheibe drehbar gelagert angeordnet ist, insbesondere mittels eines Lagers,
wobei die Außenverzahnung der außenverzahnten Scheibe im Eingriff steht mit der Innenverzahnung des Hohlrades, insbesondere welches mit einem Gehäuseteil des Getriebes drehfest verbunden ist,
wobei die Exzenterwelle drehbar gelagert ist in einer Abtriebswelle (12), insbesondere Planetenträgerwelle,
wobei die Abtriebswelle mittels **Schräglagern** (100) drehbar gelagert ist zum Hohlrad,
wobei das jeweilige Umlaufrad jeweils drehfest verbunden ist mit einer oder der Exzenterwelle, insbesondere mittels eines polygonalen Abschnitts oder mittels einer Steckverzahnung,
wobei jedes Umlaufrad mit der Sonnenradwelle im Eingriff ist,
wobei die Außenverzahnung der außenverzahnten Scheibe eine Evolventenverzahnung ist und die Innenverzahnung des Hohlrades ebenfalls eine Evolventenverzahnung ist,
**wobei eines oder jedes Schräglager jeweils Wälzkörper, insbesondere Kugeln, aufweist und jeweils einen Innenring und jeweils einen Außenring, insbesondere zur Lagerung einer um eine Drehachse drehbar angeordnete Abtriebswelle**
**wobei das Schräglager jeweils zwei Reihen von Wälzkörpern aufweist,**
**wobei die Schwerpunkte der Wälzkörper der ersten Reihe in einer Ebene angeordnet sind, deren Normalenrichtung parallel zur Achsrichtung ausgerichtet ist,**
**wobei die Schwerpunkte der Wälzkörper der zweiten Reihe in einer Ebene angeordnet sind, deren Normalenrichtung parallel zur Achsrichtung ausgerichtet ist,**
**wobei die Wälzkörper der ersten Reihe in Umfangsrichtung regelmäßig voneinander beabstandet sind,**
**wobei die Wälzkörper der zweiten Reihe in Umfangsrichtung regelmäßig voneinander beabstandet sind,**
**dadurch gekennzeichnet, dass** die beiden Reihen von Wälzkörpern axial voneinander beabstandet sind, und eine Anlaufscheibe (50) **zur axialen Begrenzung der Wälzkörper des Lagers der außenverzahnten Scheibe auf die Exzenterwelle aufgeschoben ist,**
**wobei ein an der Anlaufscheibe ausgebildeter Vorsprung eine Kante, insbesondere einen Rand, des Exzenterkernbereichs überdeckt.**

2. Getriebe nach Anspruch 1,
**dadurch gekennzeichnet, dass**
**die Abtriebswelle als zweiwangiger Planetenträger ausgeführt ist,**
**wobei an einer ersten Wange des Planetenträgers Stege ausgeformt sind und die zweite Wange derart schraubverbunden ist mit den Stegen, dass die Schräglager mit einer Vorspannung beaufschlagt sind,**
**wobei das erste Schräglager an der ersten Wange und das zweite Schräglager an der zweiten Wange abgestützt ist,**
**insbesondere wobei die Schräglager in O-Anordnung angeordnet sind**.

3. Getriebe nach mindestens einem der vorangegangenen Ansprüche,
**dadurch gekennzeichnet, dass**
die Anlaufscheibe auf einen zentrischen, insbesondere also zur Achse der Exzenterwelle rotationssymmetrischen, Bereich der Exzenterwelle aufgeschoben ist,
und/oder dass
die Anlaufscheibe, insbesondere zumindest in Umfangsrichtung, formschlüssig verbunden und/oder drehfest verbunden ist mit der Exzenterwelle, insbesondere deren Drehachse mittig durch die Kreisscheibe verläuft,

4. Getriebe nach mindestens einem der vorangegangenen Ansprüche,
**dadurch gekennzeichnet, dass**
die Anlaufscheibe verdrehgesichert ist,
wobei die Anlaufscheibe als Kreisscheibe ausgeführt ist, die einen axial hervor ragenden, insbesondere radial äußeren, Vorsprung aufweist,
wobei die Kreisscheibe eine Ausnehmung aufweist, die außermittig angeordnet ist, insbesondere wobei also der Mittelpunkt der vorzugsweise kreisförmigen Ausnehmung beabstandet ist von der Mittelachse und/oder vom Mittelpunkt der Kreisscheibe,
insbesondere so dass die Anlaufscheibe, insbesondere zumindest in Umfangsrichtung, formschlüssig verbindbar und/oder drehfest verbindbar ist mit einer Exzenterwelle, insbesondere deren Drehachse mittig durch die Kreisscheibe verläuft,
insbesondere wobei der Vorsprung ringförmig ausgebildet ist und die Ringachse beabstandet ist vom der Mittelpunkt der vorzugsweise kreisförmigen Ausnehmung.

5. Getriebe nach mindestens einem der vorangegangenen Ansprüche,
**dadurch gekennzeichnet, dass**
die Anlaufscheibe als Kreisscheibe ausgeführt ist, die einen axial hervor ragenden, insbesondere radial äußeren, Vorsprung aufweist.

6. Getriebe nach Anspruch 5,
**dadurch gekennzeichnet, dass**
wobei die Kreisscheibe eine Ausnehmung aufweist, die außermittig angeordnet ist, insbesondere wobei also der Mittelpunkt der vorzugsweise kreisförmigen Ausnehmung beabstandet ist von der Mittelachse und/oder vom Mittelpunkt der Kreisscheibe,
insbesondere wobei der Vorsprung ringförmig ausgebildet ist und die Ringachse beabstandet ist vom der Mittelpunkt der vorzugsweise kreisförmigen Ausnehmung.

7. Getriebe nach mindestens einem der vorangegangenen Ansprüche,
**dadurch gekennzeichnet, dass**
der vom Vorsprung überdeckte axiale Bereich von vom dem Exzenterkernbereich überdeckten axialen Bereich umfasst ist,
und/oder wobei der von der Anlaufscheibe überdeckte axiale Bereich mit dem von dem Exzenterkernbereich überdeckten axialen Bereich überlappt, insbesondere echt überlappt.

8. Getriebe nach mindestens einem der vorangegangenen Ansprüche,
**dadurch gekennzeichnet, dass**
der Vorsprung kraftschlüssig mit dem Exzenterkernbereich verbunden ist, insbesondere auf diesen Bereich in radialer Richtung elastisch aufgedrückt ist.

9. Getriebe nach mindestens einem der vorangegangenen Ansprüche,
**dadurch gekennzeichnet, dass**
der Exzenterkernbereich ein kreiszylindrischer Abschnitt ist, der parallel aber beabstandet, insbesondere also nicht koaxial, zur Mittenachse der Exzenterwelle und/oder des Umlaufrades angeordnet ist.

10. Getriebe nach mindestens einem der vorangegangenen Ansprüche,
**dadurch gekennzeichnet, dass**
die Exzenterwelle einen unrund geformten Abschnitt aufweist, an welchem das Umlaufrad drehfest mit der Exzenterwelle verbunden ist.

11. Getriebe nach Anspruch 10,
**dadurch gekennzeichnet, dass**
der unrund geformte Abschnitt axial beabstandet ist vom Exzenterkernbereich.

12. Getriebe nach Anspruch 11 oder 10,
**dadurch gekennzeichnet, dass**
der unrund geformte Abschnitt hypotrochoidal geformt ist, insbesondere also als Hypotrochoide geformt ist oder aus hypotrochoidalen Abschnitten zusammengesetzt ist.

13. Getriebe nach Anspruch 11, 10 oder 12,
**dadurch gekennzeichnet, dass**
das Umlaufrad eine entsprechend dem unrund geformten Abschnitt geformte Ausnehmung aufweist,
insbesondere so dass das Umlaufrad drehfest und spielfrei mittels des unrunden Abschnittes mit der Exzenterwelle verbunden ist.

14. Getriebe nach mindestens einem der vorangegangenen Ansprüche,
**dadurch gekennzeichnet, dass**
die Außenverzahnung der Scheibe mit einem Hohlrad, insbesondere mit einem gehäusebildenden Hohlrad im Eingriff ist,
und/oder dass
die Außenverzahnung als Evolventenverzahnung ausgeführt ist,
und/oder dass
die Exzenterwelle einen zweiten Exzenterkernbereich aufweist, der axial beabstandet ist vom ersten Exzenterkernbereich und einen Versatz in Umfangsrichtung von 180° aufweist,
insbesondere wobei die Exzenterkernbereiche gleichartig geformt ausgeführt sind,
und/oder dass
die Exzenterwelle drehbar gelagert in einer Abtriebswelle des Getriebes aufgenommen ist, insbesondere wobei die Achse der Exzenterwelle parallel und beabstandet zur Achse der Abtriebswelle angeordnet ist,
und/oder dass
die Abtriebswelle mittels zumindest eines Schräglagers in dem Hohlrad drehbar gelagert ist,
und/oder dass
das Umlaufrad mit einer Sonnenradverzahnung im Eingriff ist, die koaxial zur Abtriebswelle angeordnet ist,
insbesondere wobei das Umlaufrad, die Sonnenradverzahnung und mindestens ein weiteres Umlaufrad eine Stirnradverteilgetriebestufe bilden,
und/oder dass
die Sonnenradverzahnung drehfest und koaxial zu einem Zahnrad angeordnet ist, das im Eingriff mit einem von einem Elektromotor direkt oder über eine Kupplung angetriebenen Verzahnungsteil, insbesondere Ritzel, ist,
und/oder dass
die Exzenterwelle einen zweiten Exzenterkernbereich aufweist, auf dem eine zweite außenverzahnte Scheibe des Getriebes drehbar gelagert angeordnet ist,
wobei die Außenverzahnung der zweiten Scheibe mit der Innenverzahnung des Hohlrades im Eingriff ist.

## Claims

1. A gear unit with at least one eccentric shaft (11),
at least one externally toothed disc (7)
and at least one epicyclic wheel, in particular planet wheel, of a sun gear shaft (1),
and
a ring gear (9),
wherein the eccentric shaft has an eccentric core region on which the externally toothed disc is arranged rotatably mounted, in particular by means of a bearing,
wherein the external gearing of the externally toothed disc is engaged with the internal gearing of the ring gear, in particular which gear is connected in rotation-resistant manner to a housing part of the gear unit,
wherein the eccentric shaft is rotatably mounted in an output shaft (12), in particular pinion cage shaft,
wherein the output shaft is rotatably mounted in relation to the ring gear by means of angular contact bearings (100),
wherein the respective epicyclic wheel is connected in each case in rotation-resistant manner to a or the eccentric shaft, in particular by means of a polygonal portion or by means of a spline,
wherein each epicyclic wheel is engaged with the sun gear shaft,
wherein the external gearing of the externally toothed disc is involute toothing and the internal gearing of the ring gear likewise is involute toothing,
wherein one or each angular contact bearing has in each case rolling elements, in particular balls, and in each case an inner ring and in each case an outer ring, in particular for mounting an output shaft which is rotatably arranged about an axis of rotation,
wherein the angular contact bearing has in each case two rows of rolling elements,
wherein the centres of gravity of the rolling elements of the first row are arranged in a plane, the normal direction of which is oriented parallel to the axial direction,
wherein the centres of gravity of the rolling elements of the second row are arranged in a plane, the normal direction of which is oriented parallel to the axial direction,
wherein the rolling elements of the first row are spaced apart regularly from each other in the circumferential direction,
wherein the rolling elements of the second row in the circumferential direction are spaced apart regularly from each other,
**characterised in that** the two rows of rolling elements are axially spaced apart from each other, and a thrust washer (50) for axially limiting the rolling elements of the bearing of the externally toothed disc is pushed onto the eccentric shaft,
wherein a projection formed on the thrust washer covers an edge, in particular a margin, of the eccentric core region.

2. A gear unit according to Claim 1,
**characterised in that**
the output shaft is formed as a pinion cage with two side pieces,
wherein webs are formed on a first side piece of the pinion cage and the second side piece is screw-connected to the webs such that the angular contact bearings are subjected to initial tension,
wherein the first angular contact bearing is supported on the first side piece and the second angular contact bearing on the second side piece,
in particular wherein the angular contact bearings are arranged in an O-arrangement.

3. A gear unit according to at least one of the preceding claims,
**characterised in that**
the thrust washer is pushed onto a central region, in particular therefore one which is rotationally symmetrical to the axis of the eccentric shaft, of the eccentric shaft,
and/or **in that**
the thrust washer, in particular at least in the circumferential direction, is connected in positive manner and/or is connected in rotation-resistant manner to the eccentric shaft, in particular the axis of rotation thereof runs centrally through the circular disc.

4. A gear unit according to at least one of the preceding claims,
**characterised in that**
the thrust washer is secured against twisting,
wherein the thrust washer is formed as a circular disc which has an axially protruding, in particular radially outer, projection,
wherein the circular disc has a cutout which is arranged eccentrically, in particular wherein therefore the centre point of the preferably circular cutout is spaced apart from the centre line and/or from the centre point of the circular disc,
in particular such that the thrust washer, in particular at least in the circumferential direction, can be connected in positive locking manner and/or can be connected in rotation-resistant manner to an eccentric shaft, in particular the axis of rotation thereof runs centrally through the circular disc,
in particular wherein the projection is formed in annular manner and the ring axis is spaced apart from the centre point of the preferably circular cutout.

5. A gear unit according to at least one of the preceding claims,
**characterised in that**
the thrust washer is formed as a circular disc which has an axially protruding, in particular radially outer, projection.

6. A gear unit according to Claim 5,
**characterised in that**
wherein [sic] the circular disc has a cutout which is arranged eccentrically, in particular wherein therefore the centre point of the preferably circular cutout is spaced apart from the centre line and/or from the centre point of the circular disc,
in particular wherein the projection is formed in annular manner and the ring axis is spaced apart from the centre point of the preferably circular cutout.

7. A gear unit according to at least one of the preceding claims,
**characterised in that**
the axial region covered by the projection is encompassed by the axial region covered by the eccentric core region,
and/or wherein the axial region covered by the thrust washer overlaps with the axial region covered by the eccentric core region, in particular overlaps true.

8. A gear unit according to at least one of the preceding claims,
**characterised in that**
the projection is connected in non-positive manner to the eccentric core region, in particular is elastically pressed onto this region in the radial direction.

9. A gear unit according to at least one of the preceding claims,
**characterised in that**
the eccentric core region is a regular-cylindrical portion which is arranged parallel to but spaced apart from, in particular therefore non-coaxially with, the centre line of the eccentric shaft and/or of the epicyclic wheel.

10. A gear unit according to at least one of the preceding claims,
**characterised in that**
the eccentric shaft has a non-circular portion on which the epicyclic wheel is connected in rotation-resistant manner to the eccentric shaft.

11. A gear unit according to Claim 10,
**characterised in that**
the non-circular portion is axially spaced apart from the eccentric core region.

12. A gear unit according to Claim 11 or 10,
**characterised in that**
the non-circular portion is formed hypotrochoidally, in particular therefore is formed as a hypotrochoid or is composed of hypotrochoidal portions.

13. A gear unit according to Claim 11, 10 or 12,
**characterised in that**
the epicyclic wheel has a cutout shaped corresponding to the non-circular portion,
in particular so that the epicyclic wheel is connected to the eccentric shaft in rotation-resistant manner and without play by means of the non-circular portion.

14. A gear unit according to at least one of the preceding claims,
**characterised in that**
the external gearing of the disc is engaged with a ring gear, in particular with a housing-forming ring gear,
and/or **in that**
the external gearing is formed as involute toothing,
and/or **in that**
the eccentric shaft has a second eccentric core region which is axially spaced apart from the first eccentric core region and has an offset in the peripheral direction of 180°,
in particular wherein the eccentric core regions are embodied similarly shaped,
and/or **in that**
the eccentric shaft is received rotatably mounted in an output shaft of the gear unit, in particular wherein the axis of the eccentric shaft is arranged parallel to and spaced apart from the axis of the output shaft,
and/or **in that**
the output shaft is rotatably mounted in the ring gear by means of at least one angular contact bearing,
and/or **in that**
the epicyclic wheel is engaged with sun gear toothing which is arranged coaxially with the output shaft,
in particular wherein the epicyclic wheel, the sun gear toothing and at least one further epicyclic wheel form a spur gear transfer gear stage,
and/or **in that**
the sun gear toothing is arranged in rotation-resistant manner and coaxially with a gear wheel which is engaged with a toothed part, in particular pinion, driven by an electric motor directly or by way of a coupling,
and/or **in that**
the eccentric shaft has a second eccentric core region on which a second externally toothed disc of the gear unit is arranged rotatably mounted,
wherein the external gearing of the second disc is engaged with the internal gearing of the ring gear.

## Revendications

1. Transmission comprenant au moins un arbre à excentrique (11),
au moins un disque (7) denté extérieurement,
au moins un pignon de renvoi, en particulier un pignon satellite d'un arbre (1) de roue planétaire, et
un pignon creux (9),
l'arbre à excentrique comportant une zone de noyau d'excentrique sur laquelle le disque denté extérieurement est monté avec faculté de rotation, notamment au moyen d'un palier, la denture extérieure dudit disque denté extérieurement étant en prise avec la denture intérieure du pignon creux, lequel est notamment relié avec verrouillage rotatif à une partie du carter de la transmission,
ledit arbre à excentrique étant monté à rotation dans un arbre de sortie (12), en particulier un arbre porte-satellites,
ledit arbre de sortie étant monté avec faculté de rotation par rapport au pignon creux, au moyen de paliers (100) à contact oblique,
le pignon de renvoi considéré étant relié à chaque fois, avec verrouillage rotatif, à un arbre à excentrique ou à l'arbre à excentrique, notamment au moyen d'une région polygonale ou au moyen d'une cannelure,
chaque pignon de renvoi étant en prise avec l'arbre de roue planétaire,
la denture extérieure du disque denté extérieurement étant une denture à développante, et la denture intérieure du pignon creux étant pareillement une denture à développante, sachant que l'un, ou chacun des paliers à contact oblique est respectivement pourvu de corps de roulement, en particulier de billes, et est respectivement muni d'une bague intérieure et d'une bague extérieure, notamment afin de supporter un arbre de sortie apte à tourner autour d'un axe de rotation,
sachant que le palier à contact oblique compte, à chaque fois, deux rangées de corps de roulement,
les centres de gravité des corps de roulement de la première rangée étant disposés dans un plan dont la direction normale est orientée parallèlement à la direction axiale,
les centres de gravité des corps de roulement de la seconde rangée étant disposés dans un plan dont la direction normale est orientée parallèlement à la direction axiale,
lesdits corps de roulement de la première rangée étant régulièrement espacés les uns des autres dans la direction périphérique,
lesdits corps de roulement de la seconde rangée étant régulièrement espacés les uns des autres dans la direction périphérique,
**caractérisée par le fait que** les deux rangées de corps de roulement sont espacées axialement l'une de l'autre et une rondelle de butée (50), dévolue à la délimitation axiale des corps de roulement du palier du disque denté extérieurement, est enfilée sur l'arbre à excentrique,
sachant qu'une saillie, ménagée sur ladite rondelle de butée, recouvre une arête et notamment un bord de la zone de noyau d'excentrique.

2. Transmission selon la revendication 1,
**caractérisée par le fait que**
l'arbre de sortie est réalisé sous la forme d'un porte-satellites à deux joues,
des membrures étant ménagées sur une première joue dudit porte-satellites, et la seconde joue étant reliée auxdites membrures par vissage, de telle sorte que les paliers à contact oblique soient sollicités par une précontrainte,
le premier palier à contact oblique et le second palier à contact oblique étant en appui, respectivement, sur les première et seconde joues,
sachant notamment que lesdits paliers à contact oblique sont agencés suivant une configuration en O.

3. Transmission selon au moins l'une des revendications précédentes,
**caractérisée par le fait que**
la rondelle de butée est enfilée sur une région de l'arbre à excentrique qui est située au centre, c'est-à-dire qui présente notamment une symétrie de révolution par rapport à l'axe dudit arbre à excentrique ;
et/ou **par le fait que**
ladite rondelle de butée est reliée à l'arbre à excentrique par complémentarité de formes et/ou avec verrouillage rotatif, au moins dans la direction périphérique en particulier, l'axe de rotation dudit arbre passant notamment par le centre du disque circulaire.

4. Transmission selon au moins l'une des revendications précédentes,
**caractérisée par le fait que**
la rotation de la rondelle de butée est interdite,
ladite rondelle de butée étant réalisée sous la forme d'un disque circulaire muni d'une saillie dépassant axialement et occupant, en particulier, un emplacement extérieur dans le sens radial,
ledit disque circulaire étant pourvu d'un évidement occupant une position excentrée,
sachant notamment, par conséquent, que le centre de l'évidement préférentiellement circulaire se trouve à distance de l'axe médian et/ou du centre dudit disque circulaire, notamment de façon telle que ladite rondelle de butée puisse être reliée à un arbre à excentrique par complémentarité de formes et/ou avec verrouillage rotatif, au moins dans la direction périphérique en particulier, l'axe de rotation dudit arbre passant notamment par le centre du disque circulaire,
sachant, en particulier, que ladite saillie est de réalisation annulaire et que l'axe de l'anneau se trouve à distance du centre de l'évidement préférentiellement circulaire.

5. Transmission selon au moins l'une des revendications précédentes,
**caractérisée par le fait que**
la rondelle de butée est réalisée sous la forme d'un disque circulaire muni d'une saillie dépassant axialement et occupant, en particulier, un emplacement extérieur dans le sens radial.

6. Transmission selon la revendication 5,
**caractérisée par le fait que**
le disque circulaire est pourvu d'un évidement occupant une position excentrée,
sachant notamment, par conséquent, que le centre de l'évidement préférentiellement circulaire se trouve à distance de l'axe médian et/ou du centre dudit disque circulaire, sachant, en particulier, que la saillie est de réalisation annulaire et que l'axe de l'anneau se trouve à distance du centre dudit évidement préférentiellement circulaire.

7. Transmission selon au moins l'une des revendications précédentes,
**caractérisée par le fait que**
la région axiale, couverte par la saillie, est englobée dans la région axiale couverte par la zone de noyau d'excentrique,
et/ou la région axiale couverte par la rondelle de butée est en chevauchement, notamment en chevauchement effectif, avec ladite région axiale couverte par ladite zone de noyau d'excentrique.

8. Transmission selon au moins l'une des revendications précédentes,
**caractérisée par le fait que**
la saillie est reliée par engagement positif à la zone de noyau d'excentrique et est, en particulier, pressée élastiquement sur cette zone dans le sens radial.

9. Transmission selon au moins l'une des revendications précédentes,
**caractérisée par le fait que**
la zone de noyau d'excentrique est une région cylindrique circulaire disposée parallèlement, mais à distance de l'axe médian de l'arbre à excentrique et/ou du pignon de renvoi, en particulier, par conséquent, non coaxialement audit axe.

10. Transmission selon au moins l'une des revendications précédentes,
**caractérisée par le fait que**
l'arbre à excentrique présente une région de forme non circulaire, au niveau de laquelle le pignon de renvoi est relié audit arbre à excentrique avec verrouillage rotatif.

11. Transmission selon la revendication 10,
**caractérisée par le fait que**
la région de forme non circulaire se trouve axialement à distance de la zone de noyau d'excentrique.

12. Transmission selon la revendication 11 ou 10,
**caractérisée par le fait que**
la région de forme non circulaire est de configuration hypotrochoïde et revêt en particulier, par conséquent, la forme d'une hypotrochoïde ou est composée de segments hypotrochoïdes.

13. Transmission selon la revendication 11, 10 ou 12,
**caractérisée par le fait que**
le pignon de renvoi est doté d'un évidement dont la configuration correspond à celle de la région de forme non circulaire,
notamment de façon telle que ledit pignon de renvoi soit relié à l'arbre à excentrique avec verrouillage rotatif et avec absence de jeu, au moyen de ladite région non circulaire.

14. Transmission selon au moins l'une des revendications précédentes,
**caractérisée par le fait que**
la denture extérieure du disque est en prise avec un pignon creux, en particulier avec un pignon creux formant carter ;
et/ou **par le fait que**
ladite denture extérieure est réalisée en tant que denture à développante ;
et/ou **par le fait que**
l'arbre à excentrique comporte une seconde zone de noyau d'excentrique, située axialement à distance de la première zone de noyau d'excentrique et présentant un décalage de 180° dans la direction périphérique,
sachant notamment que lesdites zones de noyau d'excentrique sont réalisées avec configurations de même type ;
et/ou **par le fait que**
ledit arbre à excentrique est logé, avec montage rotatif, dans un arbre de sortie de ladite transmission,
sachant notamment que l'axe dudit arbre à excentrique est disposé parallèlement et à distance de l'axe dudit arbre de sortie ;
et/ou **par le fait que**
ledit arbre de sortie est monté dans ledit pignon creux, avec faculté de rotation, à l'aide d'au moins un palier à contact oblique ;
et/ou **par le fait que**
le pignon de renvoi est en prise avec une denture de roue planétaire disposée coaxialement audit arbre de sortie,
sachant notamment que ledit pignon de renvoi, ladite denture de roue planétaire, et au moins un pignon de renvoi supplémentaire, forment un étage de boîte de transfert à engrenage droit ;
et/ou **par le fait que**
ladite denture de roue planétaire est agencée avec verrouillage rotatif, et coaxialement à une roue dentée en prise avec une partie dentée, en particulier un pignon entraîné par un moteur électrique, directement ou par l'intermédiaire d'un accouplement ;
et/ou **par le fait que**
ledit arbre à excentrique est pourvu d'une seconde zone de noyau d'excentrique sur laquelle un second disque de ladite transmission, denté extérieurement, est monté avec faculté de rotation,
la denture extérieure dudit second disque étant en prise avec la denture intérieure dudit pignon creux.
